**Europäisches Patentamt**

**European Patent Office**

**Office européen des brevets**

(19)

(11) Numéro de publication: **0 086 132
B1**

(12) FASCICULE DE BREVET EUROPEEN

(45) Date de publication du fascicule du brevet:
20.03.85

(51) Int. Cl.⁴: **C 03 B 37/025**

(21) Numéro de dépôt: **83400165.3**

(22) Date de dépôt: **25.01.83**

(54) **Procédé de production de verre de silice dopée destiné à l'élaboration de préforme pour fibre optique.**

(30) Priorité: **09.02.82 FR 8202053**

(43) Date de publication de la demande:
**17.08.83 Bulletin 83/33**

(45) Mention de la délivrance du brevet:
**20.03.85 Bulletin 85/12**

(84) Etats contractants désignés:
**DE GB SE**

(56) Documents cités:
**FR - A - 2 359 082
FR - A - 2 368 444
FR - A - 2 396 981
FR - A - 2 446 264
US - A - 3 954 431
US - A - 4 135 901**

(73) Titulaire: **THOMSON-CSF, 173, Boulevard Haussmann,
F-75379 Paris Cedex 08 (FR)**

(72) Inventeur: **Gauthier, Francis, THOMSON-CSF
SCPI 173, bld Haussmann, F-75379 Paris Cedex 08 (FR)**
Inventeur: **Gombert, Jean-Camille, THOMSON-CSF
SCPI 173, bld Haussmann, F-75379 Paris Cedex 08 (FR)**

## Description

L'invention se rapporte aux fibres de verre conductrices de la lumière, et plus particulièrement à la production de verres destinés à l'élaboration de préformes pour fibres optiques.

De nombreux procédés de fabrication de fibres optiques existent et sont bien connus de l'homme de l'art.

Certains, comme le procédé dit Modified Chemical Vapor Deposition ou MCVD, produisent des fibres de très hautes performances mais chères, car les vitesses de dépôt sont lentes. D'autres, comme le dépôt plasma grain par grain, présentent des vitesses de dépôt élevées, mais ne permettent pas de fabriquer des fibres de très hautes performances (très faible atténuation conjointement à de très grandes bandes passantes), à cause des difficultés que l'on rencontre à fabriquer des verres fortement dopés par cette méthode.

Le brevet publié en France sous le numéro 2368444 concernant le procédé dit Séparation de Phases et Lessivage ou SPL déposé au nom de la présente titulaire décrit un procédé de séparation de phases et de lessivage acide des verres pour fabriquer des préformes de fibres optiques en verre de très grande pureté. Ce procédé dit SPL est un procédé de fabrication de fibres de verre à gradient radial d'indice de réfraction, comportant la fabrication préalable d'une ébauche de diamètre supérieur à celui de la fibre, et les différents stades suivants:

— un premier stade consistant à mélanger des matières premières susceptibles d'entrer dans une composition verrière présentant le phénomène de séparation en deux phases solides interconnectées et continues de compositions différentes, lesdites matières premières présentant un degré d'impureté inférieur à $10^{-5}$ calculé en tenant compte des proportions molaires d'oxydes de métaux dits de transition, ledit premier stade comprenant ensuite la préparation d'un bain de verre en fusion;

— un deuxième stade comportant une première étape de tirage de l'ébauche à une vitesse prédéterminée à partir du bain de verre à travers un dispositif de refroidissement à gradient thermique prédéterminé, et une deuxième étape comprenant au moins un recuit thermique;

— un troisième stade comportant au moins un lessivage éliminant la phase contenant le plus d'impuretés, et un traitement thermique de séchage et de consolidation de l'ébauche.

Une des limitations de ce procédé vient de ce que les ébauches de verre cassent avec un certain taux au lessivage acide. Une autre limitation vient du fait qu'il est délicat de fabriquer des gaines optiques de façon reproductible par la méthode chimique.

La présente invention propose de pallier ces inconvénients en obtenant des verres fortement dopés par un procédé de dépôt rapide. Il est possible de fabriquer des verres dopés de composition variable en permettant de réaliser rapidement des structures de fibres variées.

Le procédé de fabrication de ces fibres, du fait de l'invention qui utilise une poudre de verre, présente les avantages du procédé dit SPL sans en avoir les limitations techniques. Il n'y a pas, en effet, dans le cas de l'invention, nécessité de fabriquer des baguettes cylindriques de géométrie rigoureuse. Le contrôle de l'initiation de la séparation de phases est assuré par le coulage à haute température et le trempage subséquent. Il n'y a pas de limitations de rendement au lessivage et au séchage par casse.

L'invention a pour objet un procédé de production de verre de silice dopée destiné à l'élaboration de préforme pour fibre optique du type comprenant les étapes suivantes:

— une première étape de fonte d'un verre dopé à partir d'un mélange d'oxydes et de carbonates dont la composition initiale permet d'induire par recuit une séparation de phases à structure interconnectée due à la décomposition spinodale, et d'affinage de ce verre afin d'obtenir un verre homogène et sans bulles;

— une deuxième étape de contrôle de la séparation de phases initiale;

— une troisième étape de recuit de ce verre pour induire la séparation de phases par décomposition spinodale permettant d'obtenir alors une phase dure composée de silice et d'au moins un oxyde dopant et une phase douce composée d'oxydes comprenant au moins les oxydes de bore et de sodium, les deux phases étant interconnectées;

— une quatrième étape d'attaque de ce verre avec des solutions ou des mélanges acides, basiques, pouvant contenir des sels ou complexants pour dissoudre la phase douce et obtenir un verre poreux constitué essentiellement de la phase dure;

— une cinquième étape de rinçage à l'eau distillée de ce verre poreux pour éliminer les éléments provenant de la phase douce; caractérisé en ce que, dans la deuxième étape de contrôle de la séparation de phase initiale, on forme le verre et on le trempe pour contrôler la séparation de phases initiale en le coulant dans des moules ou sur des plaques, et en ce qu'il comporte en outre:

— une sixième étape de séchage de verre en élevant lentement la température jusqu'à une température permettant de conserver une porosité ouverte supérieure à 60% de la porosité initiale, et

— une septième étape de fabrication d'une poudre à partir de ce verre poreux.

L'invention sera mieux comprise et d'autres caractéristiques apparaîtront au moyen de la description qui suit et des figures qui l'accompagnent, parmi lesquelles:

— les fig. 1 et 2 représentent des courbes de profils d'indice de fibres optiques de l'art connu;

— la fig. 3 représente une courbe de profil d'indice de fibres optiques de type SPL;

— la fig. 4 représente une courbe de profil d'indice de fibre SPL gainée selon le procédé de l'invention;

— la fig. 5 représente la fabrication d'une préforme selon l'invention;

— les fig. 6 et 7 représentent les courbes de profils d'indice de fibres optiques obtenus par le procédé illustré à la fig. 5;

— les fig. 8 à 12 représentent les procédés de fabrication de préformes à partir de verre de l'invention.

Une des difficultés premières du procédé SPL apparaît au formage des ébauches cylindriques à partir d'une fonte de borosilicate alcalin fortement dopé par exemple avec un oxyde tel que l'oxyde de germanium $GeO_2$: il faut obtenir des cannes de section parfaitement circulaire, et de composition homogène sans bulles ou infondus, et n'ayant subi aucune séparation de phases. Après un recuit adéquat permettant de créer une structure spinodale par séparation de phases contrôlée, on lessive à l'acide cette ébauche avec une probabilité de rupture au lessivage de 30% environ pour obtenir une baguette de verre poreux dopé.

Un traitement chimique complexe permet de créer une gaine optique. Après une étape de séchage longue (10 à 400 h) et où les risques de casse existent encore, on rétreint le verre poreux à haute température pour obtenir une préforme de fibre multimodale à gradient d'indice. La fibre est obtenue par fibrage classique de cette préforme.

La présente invention se propose d'utiliser un verre poreux ultrapur ou un verre obtenu après son rétreint comme matière première brute pour remplacer la matière première, telle que la poudre d'oxyde de silicium $SiO_2$, de germanium $GeO_2$, de bore $B_2O_3$, etc., utilisée dans certains procédés, par exemple dans le dépôt en grain par grain par torche plasma, ou pour remplacer les gaz halogénures dans le cas du Plasma Chemical Vapor Deposition ou PCVD.

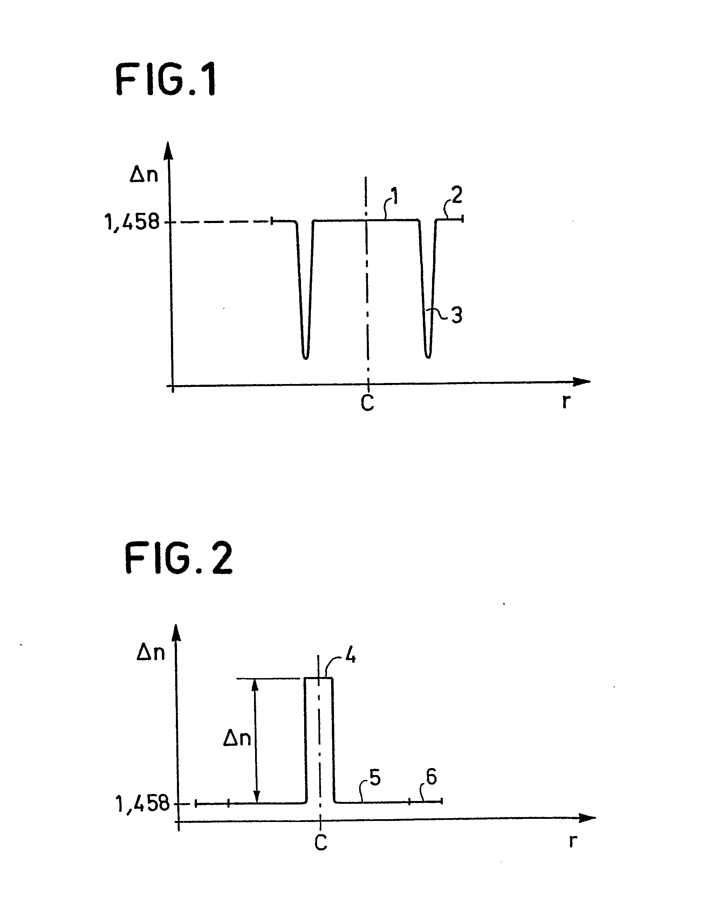

Par exemple, dans l'art antérieur, le dépôt grain par grain par torche à plasma permettait à partir de grains de silice pure (quartz naturel ou de synthèse) d'obtenir un lingot cylindrique de très grandes dimensions (diamètre = n × 10 cm, longueur = n × 100 cm) en verre de silice ultrapure avec des vitesses de dépôt élevées. Ce lingot permet de fabriquer le cœur des préformes pour fibres optiques ayant le profil décrit en fig. 1, où 1 représente le cœur en silice pure, 2 la gaine mécanique en silice pure et 3 la gaine optique dopée au fluor par exemple. C représente le centre de préforme. La valeur 1,458 est la valeur de l'indice de la silice pure.

Pour fabriquer cette préforme à partir du lingot constituant le cœur 1, il faut encore fabriquer une gaine optique 3, par exemple en déposant longitudinalement un verre dopé au fluor par une technique de plasma utilisant une réaction d'oxydation en phase gazeuse à partir d'halogénures.

Pour faire une structure guidante meilleure que celle décrite en fig. 1, il est intéressant de réaliser un profil à saut du type représenté à la fig. 2, où 4 représente le cœur en silice dopée à l'oxyde de germanium ($GeO_2$) par exemple, 5 la gaine optique et 6 la gaine mécanique; ces deux gaines pouvant être réalisées dans le même matériau en silice par exemple ($SiO_2$).

En effet, dans la structure ou profil précédemment décrit en fig. 1, la diffusion rapide du fluor ne permet pas de réaliser un saut d'indice brutal nécessaire pour contrôler le cœur des fibres monomodes. Seules des fibres multimodes de faible bande passante ont pu être réalisées.

Pour réaliser la structure de la fig. 2, il faut être capable de doper fortement la silice pour former le cœur.

Une limitation du procédé grain par grain vient de ce que l'on ne sait pas, à ce jour, obtenir de lingot de silice dopée convenablement. Il n'est pas possible d'incorporer dans le verre une quantité de dopant suffisamment élevée pour augmenter l'indice de réfraction du verre par rapport à celui de la silice pure. De plus, on ne sait pas contrôler la reproductibilité de la teneur en dopant obtenue. La raison est que les dopants ont une tension de vapeur plus faible que la silice et s'évaporent à très haute température dans le plasma. Par cette technique, on ne sait pas doper la silice avec des matières augmentant l'indice telles que le germanium, le phosphore, le baryum, le césium, l'aluminium, le plomb.

La présente invention apporte des moyens de réaliser le dopage de cœur pour obtenir la structure de la fig. 2.

Dans le tableau 1, on trouve en A la gamme des verres de base du verre de préforme du procédé de l'invention, en B un exemple de composition typique, et en C deux exemples de compositions du verre résultant lessivé avec lequel la préforme est alors fabriquée.

Dans la suite de la description, quelques exemples sont donnés à titre descriptif non limitatif.

*Exemple 1*

Cet exemple illustre l'utilisation d'un verre dopé obtenu par séparation de phases comme matière première dans un procédé de dépôt de type Verneuil en grain par grain à torche à plasma pour gainer une préforme du type SPL.

On prépare un borosilicate dont la teneur en dopant, par exemple d'oxyde de germanium, peut aller jusqu'à 33% molaire.

On fond le verre borosilicaté à partir du mélange d'oxydes et de carbonates, puis on l'affine afin d'obtenir un verre homogène et sans bulles.

On forme le verre et on le trempe pour contrôler la séparation de phases initiale en le coulant dans des moules ou sur des plaques. Il n'est pas nécessaire d'obtenir une géométrie spécifique, mais il est recommandé d'utiliser des épaisseurs inférieures à 2 cm. Il est possible aussi de former des billes. On recuit ce verre pour induire la séparation de phases par décomposition spinodale. Il se forme alors une phase dure composée de silice et d'oxyde dopant, par exemple d'oxyde de germanium et une phase douce composée d'oxydes comprenant au moins les oxydes de bore et de sodium. Les deux phases sont interconnectées.

On attaque le verre avec des acides pour dissoudre la phase douce et obtenir un verre poreux constitué essentiellement de la phase dure.

On rince à l'eau distillée le verre poreux pour éliminer les éléments provenant de la phase douce.

On sèche ce verre dans une enceinte en élevant lentement la température jusqu'à 700° environ, tout en appliquant au verre un vide poussé ou une circulation de gaz sec. On élève lentement la température jusqu'à une température permettant de conserver une porosité ouverte supérieure à 60% de la porosité initiale.

Il est possible soit d'utiliser une poudre formée par broyage du verre poreux avec un spectre de granulométrie contrôlée, soit de rétreindre le verre poreux pour en faire, après broyage, une poudre. Dans les deux cas, la composition du verre obtenu est identique. Seule la masse volumique de la poudre obtenue change.

Selon les proportions des oxydes employés dans le verre borogermanosilicate de départ, ou verre de base, il est possible d'obtenir des verres à teneur en germanium comprise entre 0 et 33%. Cela permet d'atteindre dans les préformes de fibres optiques obtenues avec ces verres des ouvertures numériques de 0,24, compte tenu des différences d'indice de $2 \times 10^{-2}$ entre verre de cœur et verre de gaine choisis.

En jouant sur la durée de lessivage acide, il est possible d'ajuster finement la teneur en germanium des verres lessivés car l'oxyde de germanium est très lentement attaqué par certains acides ou mélanges comme l'eau régale.

Suivant la nature des dopants et du milieu d'attaque, il est aussi possible d'ajuster finement la teneur en dopant des verres lessivés. La nature du milieu d'attaque peut être des acides organiques ou minéraux, de l'eau, des bases. On peut ajouter à ce milieu des sels ou des complexants.

En utilisant une torche à plasma avec la poudre de verre ainsi fabriquée, il est possible d'obtenir un verre optique homogène. Les particules de poudre de verre passent à travers la flamme de la torche à plasma réglée aux conditions d'oxydoréduction convenables pour les verres choisis. Elles sont chauffées par celle-ci en même temps qu'entraînées pour former de fines gouttelettes de verre dense, rétreint, et déshydraté par la haute température de la flamme.

Ces gouttes de verre sont ainsi projetées sur une cible où elles s'agglutinent pour former une couche de verre homogène.

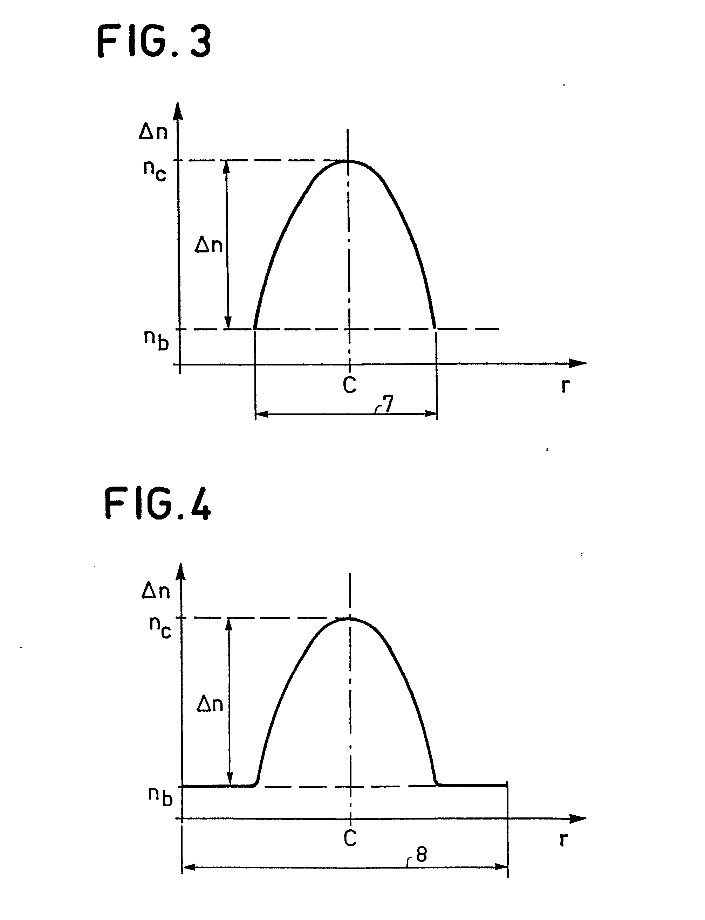

La cible peut être par exemple une préforme du type SPL 7 dont la structure ou profil d'indice est représentée en fig. 3. r représente le rayon de celle-ci, et n la différence des indices de cœur et de gaine. $n_c$ est l'indice du cœur de cette préforme et $n_b$ l'indice du bord de cette préforme.

En déposant un nombre suffisant de couches de verre dont l'indice est $n_b$, il est possible de créer une structure de fibre multimode telle que celle représentée en fig. 4. 8 représente la préforme avec une gaine optique.

La préforme obtenue peut être polie chimiquement à l'acide fluorhydrique et/ou polie à la flamme pour éliminer ses défauts de surface. On obtient ainsi des fibres de meilleure résistance mécanique.

*Exemple II*

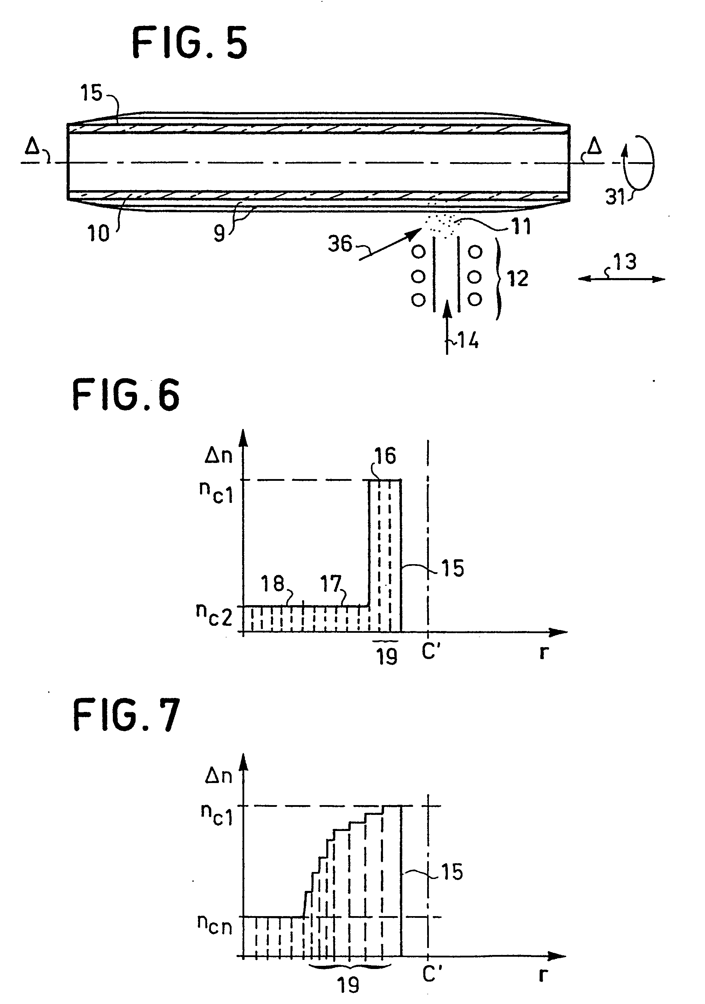

Cet exemple illustre la fabrication, représentée à la fig. 5, d'une préforme complète par procédé Verneuil, en utilisant, à partir des verres de l'invention, une torche à plasma 12 comme moyen de chauffe par exemple; ici, cette torche est à titre d'exemple inductive. La cible est un tube mince 10 de silice pure représenté à la fig. 5 en rotation 31. La torche à plasma 12 se déplace en translation 13. On dépose par couches 9 successives des verres 11 de teneur en germanium permettant d'obtenir les profils d'indice décrits dans les fig. 6 et 7. 14 représente l'entrée de la poudre de verre, mélangée avec un gaz plasmagène dans la torche à plasma 12. 15 représente la surface du tube 10.

On peut introduire la poudre de verre en 36. Cette poudre de verre peut être injectée en 14 ou en 36 ou à la fois en 14 et 36.

Sur les fig. 6 et 7, $n_{c1}$ représente l'indice du verre de composition $C_1$ c'est-à-dire le cœur, et $n_{c2}$ et $n_{cn}$ les indices des verres de composition $C_2$ et $C_n$, c'est-à-dire celle des couches 2 et n de la gaine. C' correspond au centre du tube-support 10; il correspond donc à l'axe de symétrie $\Delta$ de la fig. 5.

A la fig. 6, le cœur 16 de verre dopé est formé d'une ou plusieurs couches 19 de verre de composition identique $C_1$, 17 représentant la gaine optique et 18 la gaine mécanique.

A la fig. 7, plusieurs couches 19 de verres dopés de différentes concentrations, pour former le cœur de la préforme, ont été déposées.

Le dépôt terminé, on rétreint partiellement l'ensemble, puis on attaque par le canal central le tube-cible en silice avec de l'acide, par exemple l'acide fluorhydrique, jusqu'à le dissoudre totalement, puis on rétreint totalement le tube obtenu pour obtenir une barre qui est une préforme.

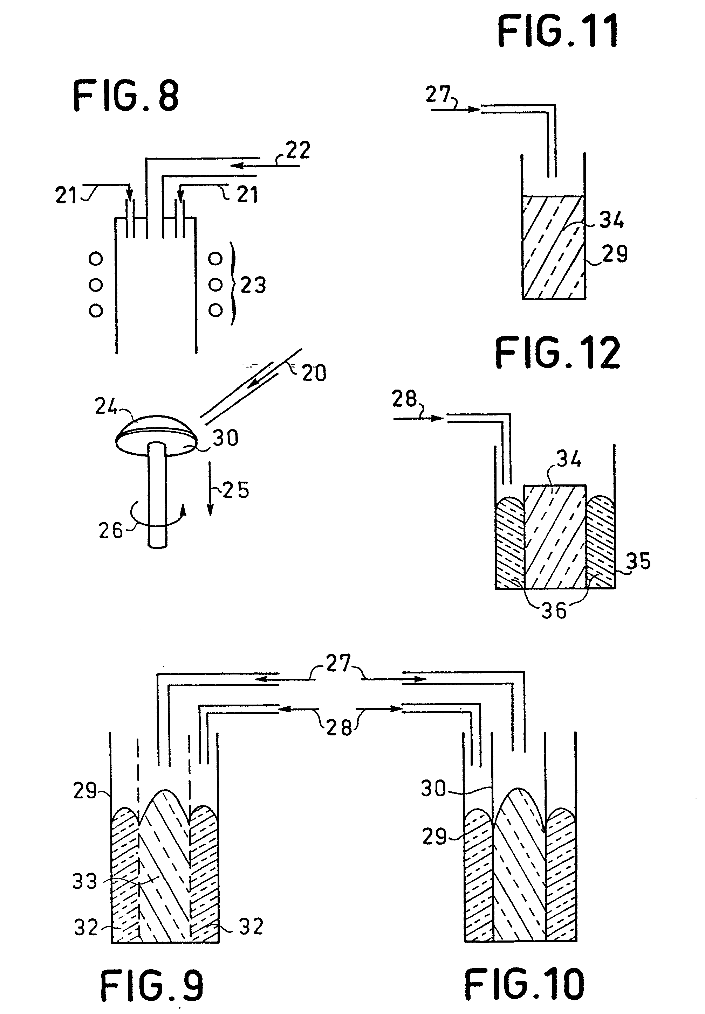

Sur la fig. 8, la cible est une plaque 30 de silice circulaire en rotation 26 et en translation 25. La poudre de verre est amenée dans la torche axialement 22 ou latéralement 20. La croissance 24 de la préforme est axiale. On peut alors simultanément faire croître le cœur et la gaine en projetant deux verres différents, l'un au centre de la cible, l'autre à la périphérie.

En 21 on injecte un gaz plasmagène, en 22 un verre de composition $C_1$, et en 20 un verre de composition $C_2$. On peut alors déplacer axialement, 25, la plaquette 30 en rotation 26, ce qui permet la croissance continue 24 sur celle-ci.

*Exemple III*

Fabrication d'une préforme à partir des verres de l'invention par frittage et rétreint des poudres.

Comme représenté à la fig. 9, dans un tube poreux 29 on fait s'écouler simultanément deux poudres de verre. La poudre de composition $C_1$ s'écoule au centre 33 en formant un cône, tandis que la poudre de composition $C_2$ s'écoule en couronne 32. En contrôlant les débits respectifs, il est possible de remplir le tube de telle façon qu'on obtient un cylindre de composition $C_1$ et une couronne de composition $C_2$. On sèche et on rétreint ces verres poreux sous vide poussé ou circulation de gaz sec, par exemple d'oxygène halogéné, en augmentant lentement la température jusqu'à densification totale du verre.

Sur la fig. 10, on considère à l'intérieur du tube 29 un tube 30 concentrique au premier, ce qui permet de réaliser l'écoulement des deux poudres, comme cela est effectué à la fig. 9. On retire le tube 30 après remplissage, ou progressivement pendant le remplissage.

Une variante pour former cette préforme est d'utiliser des liants. On forme, comme représenté à la fig. 11, le cœur avec le verre $C_1$ par remplissage de la poudre imprégnée de liant dans un moule cylindrique 29. On démoule le cylindre 34 obtenu, on le place comme représenté à la fig. 12 au centre d'un moule cylindrique de plus grand diamètre 35 et l'on remplit la couronne libre 36, entre la paroi du moule et celle du premier cylindre, de poudre de verre $C_2$ 28. On démoule, on sèche et rétreint selon les règles du procédé dit SPL.

Ce procédé de l'invention permet donc:

— de doper de la silice avec du germanium et/ou les autres dopants cités, car ceux-ci sont entièrement liés dans le verre déjà formé et ne risquent pas de s'échapper par volatilisation au cours des traitements ultérieurs;

— de choisir le taux de concentration en dopants des verres obtenus, donc d'avoir à sa disposition toute une échelle d'indices permettant de faire des préformes et des fibres avec différentes valeurs de n, donc d'ouvertures numériques variées; en particulier il est possible de fabriquer des fibres multimodales et des fibres unimodales;

— de fabriquer des fibres avec des vitesses de dépôt ou de fabrication élevées;

— de bénéficier de l'effet de purification de la séparation de phases.

La matière première peut être fabriquée en grande quantité.

Compte tenu des concentrations en dopants variables dans ces verres, on peut atteindre des différences d'indice n de $2 \times 10^{-2}$, soit une ouverture numérique ON de: $ON = \sqrt{2n\Delta n}$, n étant l'indice moyen et $\Delta n$ la différence d'indice entre le cœur et la gaine, soit $ON = 0,24$.

Mais la teneur en ions $OH^-$ et la présence d'une faible quantité d'oxyde de bore $B_2O_3$ augmentent l'atténuation aux grandes longueurs d'onde, dans l'infrarouge à 1,3 et 1,55 μ.

Ces verres sont très utilisables pour les fenêtres à 0,85 et 1,06 μ.

### Tableau

#### A. Gamme des compositions molaires des verres de base (borosilicates dopés)

| | | | |
|---|---|---|---|
| Oxyde de silicium | $SiO_2$: | 40 à 70% | Verre |
| Oxyde de bore | $B_2O_3$: | 10 à 55% | de base |
| Oxyde de sodium | $Na_2O$: | 0 à 20% | boro- |
| Oxyde de potassium | $K_2O$: | 0 à 20% | silicate |
| Oxyde de germanium | $GeO_2$: | 0 à 33% | |
| Oxyde d'aluminium | $Al_2O_3$: | 0 à 6% | |
| Oxyde de baryum | $BaO$: | 0 à 10% | Dopants |
| Oxyde de plomb | $PbO$: | 0 à 30% | |
| Oxyde de phosphore | $P_2O_5$: | 0 à 15% | |

#### B. Composition typique d'un borogermanosilicate alcalin à cinq composants

| | | |
|---|---|---|
| Oxyde de silicium | $SiO_2$: | 54% |
| Oxyde de germanium | $GeO_2$: | 10% |
| Oxyde de bore | $B_2O_3$: | 28% |
| Oxyde de sodium | $Na_2O$: | 5% |
| Oxyde de potassium | $K_2O$: | 3% |

#### C. Compositions typiques obtenues après lessivage

| | | |
|---|---|---|
| Oxyde de silicium | $SiO_2$: | 80%; 65% |
| Oxyde de germanium | $GeO_2$: | 16%; 33% |
| Oxyde de bore | $B_2O_3$: | 4%; 2% |
| Oxyde de sodium | $Na_2O$: | traces; traces |
| Oxyde de potassium | $K_2O$: | traces; traces |

## Revendications

1. Procédé de production de verre de silice dopée destiné à l'élaboration de préformes pour fibres optique du type comprenant les étapes suivantes:

— une première étape de fonte d'un verre dopé à partir d'un mélange d'oxydes et de carbonates dont la composition initiale permet d'induire par recuit une séparation de phases à structure interconnectée due à la décomposition spinodale, et d'affinage de ce verre afin d'obtenir un verre homogène et sans bulles;

— une deuxième étape de contrôle de la séparation de phases initiale;

— une troisième étape de recuit de ce verre pour induire la séparation de phases par décomposition spinodale permettant d'obtenir alors une phase dure composée de silice et au moins d'un oxyde dopant, et une phase douce composée d'oxydes comprenant au moins les oxydes de bore et de sodium, les deux phases étant interconnectées;

— une quatrième étape d'attaque de ce verre avec des solutions ou des mélanges acides, basiques, pouvant contenir des sels ou complexants pour dissoudre la phase douce et obtenir un verre poreux constitué essentiellement de la phase dure;

— une cinquième étape de rinçage à l'eau distillée de ce verre poreux pour éliminer les éléments provenant de la phase douce;

ce procédé étant caractérisé en ce que, dans la deuxième étape de contrôle de la séparation de phase initiale, on forme le verre et on le trempe pour contrôler la séparation de phases initiale en le coulant dans des moules ou sur des plaques, et en ce qu'il comporte en outre:

— une sixième étape de séchage de verre en élevant lentement la température jusqu'à une température permettant de conserver une porosité ouverte supérieure à 60% de la porosité initiale, et

— une septième étape de fabrication d'une poudre à partir de ce verre poreux.

2. Procédé selon la revendication 1, caractérisé en ce que, dans la sixième étape de séchage du verre poreux, ce verre est mis dans une enceinte soumise à un vide poussé.

3. Procédé selon la revendication 1, caractérisé en ce que, dans la sixième étape de séchage du verre, ce verre est mis dans une enceinte dans laquelle circule au moins un gaz sec.

4. Procédé selon la revendication 1, caractérisé en ce que, dans la septième étape, la poudre est obtenue par broyage du verre, et en ce que la granulométrie est contrôlée.

5. Procédé selon la revendication 1, caractérisé en ce que, dans la septième étape, le verre poreux est rétreint jusqu'à sa densification totale, et que la poudre est fabriquée à partir de ce verre rétreint.

6. Procédé selon la revendication 1, caractérisé en ce que le verre dopé comprend au moins un dopant choisi parmi les oxydes suivants; oxyde de germanium $GeO_2$, oxyde d'aluminium $Al_2O_3$, oxyde de plomb PbO, oxyde de baryum BaO, oxyde de phosphore $P_2O_5$.

7. Procédé selon la revendication 6, caractérisé en ce que le dopant est l'oxade de germanium.

8. Procédé selon la revendication 6, caractérisé en ce que le verre dopé est un verre borosilicaté, le borosilicate ayant une teneur en dopants jusqu'à 33% molaire.

9. Procédé selon l'une des revendications précédentes, caractérisé en ce que la poudre de verre est soumise à une torche à plasma, les particules de poudre de verre passant à travers la flamme de la torche à plasma et étant chauffées par celle-ci en même temps qu'entraînées pour former de fines gouttelettes de verre dense, rétreint, et déshydraté par la haute température de la flamme.

10. Procédé selon la revendication 9, caractérisé en ce que l'on change la composition de la poudre de verre pendant le dépôt de façon à déposer des verres de composition et d'indices différents.

11. Procédé selon la revendication 9, caractérisé en ce que ces gouttes de verre sont projetées sur une cible où elles s'agglutinent pour former au moins une couche de verre homogène.

12. Procédé selon la revendication 11, caractérisé en ce que la cible est une préforme SPL sur laquelle on dépose un verre d'indice constant pour former une gaine optique.

13. Procédé selon la revendication 12, caractérisé en ce que la surface de la préforme est soumise à un polissage chimique à l'acide fluorhydrique, puis à un polissage à flamme d'un chalumeau.

14. Procédé selon la revendication 11, caractérisé en ce que la cible est un tube mince en rotation (31) et en translation (13), et en ce qu'on dépose des couches (9) successives de verre (11).

15. Procédé selon la revendication 14, caractérisé en ce que, après la phase de dépôt, on réalise une étape supplémentaire de rétreint partiel de l'ensemble et d'attaque par le canal central du tube en silice avec de l'acide fluorhydrique jusqu'à dissoudre totalement ce tube, et enfin de rétreint total du tube obtenu pour obtenir une préforme.

16. Procédé selon la revendication 11, caractérisé en ce que la cible est une plaque (30) de silice circulaire en rotation (26) et en translation (25), la poudre de verre étant amenée dans la torche à plasma, la croissance (24) de la préforme étant axiale, ce qui permet simultanément de faire croître le cœur et la gaine.

17. Procédé selon la revendication 1, caractérisé en ce que, ayant fabriqué deux poudres de verres de composition $C_1$ (27) et $C_2$ (28), on fait s'écouler simultanément ces deux poudres dans un tube poreux (29), la poudre de composition $C_1$ s'écoulant au centre (33) en formant un cône, tandis que la poudre de composition $C_2$ s'écoule en couronne (32), de manière à obtenir un cylindre de composition $C_1$ et une couronne de composition $C_2$, l'ensemble étant alors séché et rétreint en augmentant la température lentement jusqu'à obtenir la densification totale du verre.

18. Procédé selon la revendication 17, caractérisé en ce que l'ensemble est séché et rétreint dans une enceinte soumise à un vide poussé.

19. Procédé selon la revendication 17, caractérisé en ce que l'ensemble est séché et rétreint dans une enceinte dans laquelle circule au moins un gaz sec.

20. Procédé selon la revendication 1, caractérisé en ce que, ayant fabriqué deux poudres de verres de compositions $C_1$ (27) et $C_2$ (28), ce procédé, utilisant des liants, comporte une étape supplémentaire pendant laquelle on forme le cœur avec le verre de composition $C_1$ par remplissage de la poudre imprégnée de liant dans un moule cylindrique (29), on démoule le cylindre (34) obtenu, on le place au centre d'un moule cylindrique de plus grand diamètre (35) et l'on remplit de poudre de verre de composition $C_2$ (28) la couronne libre (36), entre la paroi du moule et celle du premier cylindre de poudre de verre, on démoule, on sèche et rétreint l'ensemble ainsi obtenu.

21. Procédé selon la revendication 5, caractérisé en ce que, ayant fabriqué deux poudres de verre de composition $C_1$ et $C_2$, ce procédé, utilisant des liants, comporte une étape supplémentaire pendant laquelle on forme le cœur avec le verre de composition $C_1$ par remplissage de la poudre imprégnée de liant dans un moule cylindrique (29), on démoule le cylindre (34) obtenu, on le place au centre d'un moule cylindrique de plus grand diamètre (35) et l'on remplit de poudre de verre de composition $C_2$ (28) la couronne libre (36), entre la paroi du moule et celle du premier cylindre de poudre de verre, on démoule, on sèche et on rétreint l'ensemble ainsi obtenu.

**Patentansprüche**

1. Verfahren zur Herstellung von dotiertem $SiO_2$-Glas, das zur Ausbildung eines Rohlings für Glasfasern bestimmt ist, wobei das Verfahren folgende Schritte aufweist:

— einen ersten Schritt des Schmelzens eines dotierten Glases ausgehend von einer Mischung von Oxiden und Karbonaten, deren ursprüngliche Zusammensetzung es ermöglicht, durch Erwärmen eine Phasentrennung mit vernetzter Struktur aufgrund der spinodalen Zersetzung zu erreichen, und einer Affinierung dieses Glases, um ein homogenes und blasenfreies Glas zu erhalten;

— einen zweiten Schnitt der Kontrolle der ursprünglichen Phasentrennung;

— einen dritten Schritt des Erwärmens dieses Glases, um die Phasentrennung durch spinodale Zersetzung zu induzieren, so dass sich eine harte, aus $SiO_2$ und mindestens einem Dotieroxid bestehende Phase und eine weiche, mindestens die Oxide von Bor und Natrium enthaltende Phase ergibt und die Phasen vernetzt sind;

— einen vierten Schritt der Behandlung dieses Glases mit sauren, basischen Lösungen, die Salze oder Komplexbildner enthalten können, um die weiche Phase aufzulösen und ein poröses Glas zu erhalten, das im wesentlichen aus der harten Phase besteht;

— einen fünften Schritt des Spülens dieses porösen Glases mit destilliertem Wasser, um die von der weichen Phase stammenden Elemente zu entfernen;

dadurch gekennzeichnet, dass man das Glas beim zweiten Schritt der Kontrolle der ursprünglichen Phasentrennung formt und zur Kontrolle der ursprünglichen Phasentrennung härtet, indem es in Formen oder auf Platten gegossen wird, und dass das Verfahren ausserdem

— einen sechsten Schritt des Trocknens des Glases aufweist, indem langsam die Temperatur bis zu einem Wert erhöht wird, bei dem eine offene Porosität von mehr als 60% der ursprünglichen Porosität erhalten bleiben kann, und

— einen siebten Schritt der Herstellung eines Pulvers aus diesem porösen Glas aufweist.

2. Verfahren nach Anspruch 1, dadurch gekennzeichnet, dass während des sechsten Schritts der Trocknung des porösen Glases dieses Glas in einen einem hohen Vakuum ausgesetzten Behälter eingebracht ist.

3. Verfahren nach Anspruch 1, dadurch gekennzeichnet, dass während des sechsten Schritts der Trocknung des Glases dieses Glas in einen Behälter eingebracht ist, in dem mindestens ein trockenes Gas zirkuliert.

4. Verfahren nach Anspruch 1, dadurch gekennzeichnet, dass während des siebten Schritts das Pulver durch Mahlen des Glases erhalten wird und dass die Korngrössenverteilung kontrolliert wird.

5. Verfahren nach Anspruch 1, dadurch gekennzeichnet, dass während der siebten Etappe das Glas bis auf seine volle Dichte verdichtet wird und dass das Pulver ausgehend von diesem verdichteten Glas hergestellt wird.

6. Verfahren nach Anspruch 1, dadurch gekennzeichnet, dass das dotierte Glas mindestens einen Dotierstoff enthält, der aus den folgenden Oxiden gewählt wird: Germaniumoxid $GeO_2$, Aluminiumoxid $Al_2O_3$, Bleioxid PbO, Bariumoxid BaO, Phosphoroxid $P_2O_5$.

7. Verfahren nach Anspruch 6, dadurch gekennzeichnet, dass der Dotierstoff Germaniumoxid ist.

8. Verfahren nach Anspruch 6, dadurch gekennzeichnet, dass das dotierte Glas ein Borosilikatglas ist und das Borosilikat einen Anteil an Dotierstoffen bis zu 33 Mol-% besitzt.

9. Verfahren nach einem der vorhergehenden Ansprüche, dadurch gekennzeichnet, dass das Glaspulver einer Plasmaflamme ausgesetzt wird, wobei die Glaspulverpartikel durch die Flamme des Plasmabrenners geführt werden und durch diese sowohl aufgeheizt als auch fortbewegt werden, um feine Tröpfchen verdichteten und wasserfreien Glases aufgrund der hohen Temperatur der Flamme zu bilden.

10. Verfahren nach Anspruch 9, dadurch gekennzeichnet, dass die Zusammensetzung des Glaspulvers während des Niederschlags geändert wird, so dass sich Gläser von unterschiedlicher Zusammensetzung und unterschiedlichem Brechungsindex ergeben.

11. Verfahren nach Anspruch 9, dadurch gekennzeichnet, dass die Glastropfen auf eine Prallplatte geworfen werden, wo sie anhaften, um mindestens eine Schicht homogenen Glases zu bilden.

12. Verfahren nach Anspruch 11, dadurch gekennzeichnet, dass die Prallplatte ein durch das SPL -Verfahren (Phasentrennung und Spülung) erhaltener Rohling ist, auf dem ein Glas mit einem konstanten Brechungsindex aufgebracht wird, um eine optische Hülle zu bilden.

13. Verfahren nach Anspruch 12, dadurch gekennzeichnet, dass die Oberfläche des Rohlings einem chemischen Poliervorgang mit Fluorwasserstoffsäure und dann einem Polieren mit der Flamme einer Lötlampe unterworfen wird.

14. Verfahren nach Anspruch 11, dadurch gekennzeichnet, dass die Prallplatte aus einem dünnen Rohr in Drehung (31) und in Translationsbewegung (13) besteht und dass aufeinanderfolgende Schichten (9) aus Glas (11) aufgebracht werden.

15. Verfahren nach Anspruch 14, dadurch gekennzeichnet, dass nach dem Schritt des Aufbringens ein zusätzlicher Schritt einer partiellen Verdichtung des Ganzen und einer Behandlung des zentralen Kanals des $SiO_2$ -Rohrs mit Fluorwasserstoffsäure durchgeführt wird, bis das Rohr gänzlich aufgelöst ist, und schliesslich ein Schritt der vollständigen Verdichtung des erhaltenen Rohrs, um einen Rohling zu erhalten.

16. Verfahren nach Anspruch 11, dadurch gekennzeichnet, dass die Prallplatte eine kreisförmige $SiO_2$ -Platte (30) ist, die in Drehung (26) und Translation (25) versetzt wird, wobei das Glaspulver in die Plasmaflamme gebracht wird und das Wachsen (24) des Rohlings axial erfolgt, so dass zugleich der Kern und die Hülle wachsen können.

17. Verfahren nach Anspruch 1, dadurch gekennzeichnet, dass nach der Herstellung von zwei Glaspulvern (27) und (28) einer Zusammensetzung $C_1$ bzw. $C_2$ gleichzeitig die beiden Pulver durch ein poröses Rohr (29) fliessen, wobei das Pulver der Zusammensetzung $C_1$ im Zentrum (33) fliesst und einen Konus bildet, während das Pulver der Zusammensetzung $C_2$ in Form einer Krone (32) fliesst, so dass ein Zylinder einer Zusammensetzung $C_1$ und eine Krone einer Zusammensetzung $C_2$ entstehen und das Ganze dann getrocknet und verdichtet wird, indem die Temperatur langsam erhöht wird, bis die vollständige Verdichtung des Glases erreicht ist.

18. Verfahren nach Anspruch 17, dadurch gekennzeichnet, dass das Ganze in einem unter hohem Vakuum stehenden Behälter getrocknet und verdichtet wird.

19. Verfahren nach Anspruch 17, dadurch gekennzeichnet, dass das Ganze in einem Behälter getrocknet und verdichtet wird, in dem mindestens ein trockenes Gas zirkuliert.

20. Verfahren nach Anspruch 1, dadurch gekennzeichnet, dass nach der Herstellung zweier Glaspulver (27, 28) der Zusammensetzung $C_1$ bzw. $C_2$ das Verfahren unter Verwendung von Bindern einen zusätzlichen Schritt enthält, während dem der Kern mit dem Glas der Zusammensetzung $C_1$ durch Füllen des mit Binder imprägnierten Pulvers in eine zylindrische Form (29) geformt wird, dann der erhaltene Zylinder (34) aus der Form entnommen wird und im Zentrum einer einen grösseren Durchmesser aufweisenden zylindrischen Form (35) angeordnet wird, und dann das Glaspulver der Zusammensetzung $C_2$ (28) in den freien Kronenbereich (36) zwischen der Wand der Form und der Wand des ersten Zylinders aus Glaspulver eingefüllt wird, worauf das so erhaltene Ganze aus der Form entnommen, getrocknet und verdichtet wird.

21. Verfahren nach Anspruch 5, dadurch gekennzeichnet, dass nach der Herstellung von zwei Glaspulvern der Zusammensetzung $C_1$ bzw. $C_2$ unter Verwendung von Bindern das Verfahren einen zusätzlichen Schritt enthält, während dem der Kern aus dem Glas der Zusammensetzung $C_1$ durch Füllen des mit Binder imprägnierten Pulvers in eine zylindrische Form (29) geformt wird, dass dann der erhaltene Zylinder (34) aus der Form entnommen und im Zentrum einer zylindrischen Form eines grösseren Durchmessers (35) angeordnet wird und dass man die freie Randzone (36) zwischen der Wand der Form und der des ersten Glaspulverzylinders mit Glaspulver der Zusammensetzung $C_2$ (28) füllt, worauf man das so erhaltene Ganze aus der Form entnimmt, trocknet und verdichtet.

## Claims

1. A process for the production of doped vitreous silica intended for the preparation of a preform for an optical fibre of the type involving the following stages:
— a first stage of melting a doped glass from a mixture of oxides and carbonates, whose initial composition makes it possible to induce, by annealing, a phase separation with an interconnected structure due to spinodal decomposition, and of refining the said glass in order to obtain a homogeneous, bubble-free glass;
— a second stage of controlling the initial phase separation;
— a third stage of annealing the said glass in order to induce the separation of the phases by spinodal decomposition, which then makes it possible to obtain a hard phase formed from silica and at least one doping oxide, and a soft phase containing at least boron oxide and sodium oxide, the two phases being interconnected;
— a fourth stage of etching said glass with basic, alkaline mixtures or solutions, which may contain salts or complexing agents in order to dissolve the soft phase and obtain a porous glass essentially constituted by the hard phase;
— a fifth stage of rinsing said porous glass with distilled water in order to eliminate elements from the soft phase;
characterized in that in the second stage of controlling the initial phase separation the glass is shaped and hardened in order to control the initial phase separation by pouring it into moulds or onto plates, and that said process also involves
— a sixth stage of drying the glass by slowly raising the temperature to a degree making it possible to conserve an open porosity of at least 60% of the initial porosity, and
— a seventh stage of producing a powder from said porous glass.

2. A process according to Claim 1, characterized in that in the sixth stage of drying the porous glass, the latter is placed in an enclosure under a high vacuum.

3. A process according to Claim 1, characterized in that in the sixth stage of drying the porous glass, the latter is placed in an enclosure in which at least one dry gas circulates.

4. A process according to Claim 1, characterized in that in the seventh stage the powder is obtained by grinding the glass and that the grain size is controlled.

5. A process according to Claim 1, characterized in that in the seventh stage the porous glass is densified up to its total densification and the powder is produced from this densified glass.

6. A process according to Claim 1, characterized in that the doped glass comprises at least one dopant chosen from among the following oxides: germanium dioxide $GeO_2$, aluminium oxide $Al_2O_3$, lead oxide PbO, barium oxide BaO and phosphorous pentoxide $P_2O_5$.

7. A process according to Claim 6, characterized in that the dopant is germanium oxide.

8. A process according to Claim 6, characterized in that the doped glass is a borosilicate glass, the borosilicate having a dopant content of up to 33 mol %.

9. A process according to any of the preceding claims, characterized in that the glass powder is exposed to a plasma torch treatment and that the glass powder particles pass through the plasma torch flame, are heated by the latter and are at the same time entrained in order to form fine droplets of dense glass, which are densified and dehydrated by the high flame temperature.

10. A process according to Claim 9, characterized in that the composition of the glass powder is changed during deposition, so as to deposit glasses having different compositions and indices.

11. A process according to Claim 9, characterized in that these glass droplets are projected onto a target, where they agglutinate to form at least one homogeneous glass layer.

12. A process according to Claim 11, characterized in that the target is a SPL preform (obtained by phase separation and washing) on which is deposited a glass having a constant index in order to form an optical sheath.

13. A process according to Claim 11, characterized in that the surface of the preform undergoes chemical polishing with hydrofluoric acid and then polishing with the aid of a torch flame.

14. A process according to Claim 11, characterized in that the target is a thin tube in rotation (31) and in translation (13) and that successive layers (9) of glass (11) are deposited.

15. A process according to Claim 14, characterized in that after the deposition phase, there is a supplementary stage of partial densification of the assembly and of etching the central channel of the silica tube with hydrofluoric acid until said tube is completely dissolved and finally the tube obtained is completely densified to obtain a preform.

16. A process according to Claim 11, characterized in that the target is a circular silica plate (30) in rotation (26) and in translation (25), the glass powder being brought into the plasma torch, the growth (24) of the preform being axial, which makes it possible to simultaneously grow the core and the sheath.

17. A process according to Claim 1, characterized in that after having produced two glass powders (27, 28) of compositions $C_1$ and $C_2$ respectively, these two powders are simultaneously made to flow into a porous tube (29), the powder of composition $C_1$ flowing in the centre (33) and forming a cone, whilst the powder of composition $C_2$ flows in the periphery (32) in order to obtain a cylinder of composition $C_1$ and a ring of composition $C_2$, the assembly then being dried and densified, whilst slowly increasing the temperature in order to obtain the complete densification of the glass.

18. A process according to Claim 17, characterized in that the assembly is dried and densified in an enclosure under a high vacuum.

19. A process according to Claim 17, characterized in that the assembly is dried and densified in an enclosure in which at least one dry gas circulates.

20. A process according to Claim 1, characterized in that after having produced two glass powders (27, 28) of compositions $C_1$ and $C_2$, said process using binders, the process involves a supplementary stage during which the core is formed with the glass of composition $C_1$ by filling binder-impregnated powder into a cylindrical mould (29), that the cylinder (34) obtained is removed from the mould, placed in the centre of a cylindrical mould with a larger diameter (35) and the free ring (36) between the mould wall and the first glass powder cylinder wall is filled with the glass powder (28) of composition $C_2$, followed by removal from the mould, drying and densifying of the resulting assembly.

21. A process according to Claim 5, characterized in that after having produced two glass powders of compositions $C_1$ and $C_2$, said process using binders, the process involves a supplementary stage during which the core is formed with glass of composition $C_1$ by filling binder-impregnated powder into a cylindrical mould (29), followed by the removal of the obtained cylinder (34) from the mould, its placing in the centre of a cylindrical mould with a larger diameter (35) and the filling of glass powder (28) of composition $C_2$ into the free ring (36) between the mould wall and the wall of the first glass powder cylinder, followed by removal from the mould, drying and densifying of the resulting assembly.

# FIG.1

# FIG.2

# FIG. 3

# FIG. 4

# FIG. 5

# FIG.6

# FIG.7

# FIG.11

# FIG.8

# FIG.12

# FIG.9

# FIG.10